# EUROPÄISCHE PATENTSCHRIFT

(11) **EP 3 853 156 B1**
(45) Veröffentlichungstag und Bekanntmachung des Hinweises auf die Patenterteilung: **28.08.2024**
(21) Anmeldenummer: 19770027.1
(22) Anmeldetag: 13.09.2019
(51) Int. Cl.: B65G 47/08, B65B 35/36, B65B 57/14, B65G 47/51, B65G 54/02, B65G 43/08, B65G 47/256

(54) **VERFAHREN UND VORRICHTUNG ZUM ZUFÜHREN VON PRODUKTEN VON EINEM ERSTEN PROZESS ZU EINEM ZWEITEN PROZESS IN EINER VERPACKUNGSANLAGE**
METHOD AND DEVICE FOR FEEDING PRODUCTS FROM A FIRST PROCESS TO A SECOND PROCESS IN A PACKAGING PLANT
PROCÉDÉ ET DISPOSITIF D'ACHEMINEMENT DE PRODUITS D'UN PREMIER PROCESSUS VERS UN SECOND PROCESSUS DANS UNE INSTALLATION D'EMBALLAGE

(30) Priorität: 18.09.2018 DE 102018215854
(43) Veröffentlichungstag der Anmeldung: 28.07.2021
(73) Patentinhaber: Optima consumer GmbH, 74523 Schwäbisch Hall (DE)
(72) Erfinder: HAHN, Klaus, 74575 Schrozberg (DE)
(74) Vertreter: Patentanwälte Ruff, Wilhelm, Beier, Dauster & Partner mbB
(86) Internationale Anmeldenummer: PCT/EP2019/074564
(87) Internationale Veröffentlichungsnummer: WO 2020/058135

(56) Entgegenhaltungen:
- WO-A1-2006/015657
- JP-A- 2000 142 625
- JP-A- 2012 031 454
- US-A1- 2015 158 611
- US-A1- 2015 375 878
- US-B2- 8 973 735

## Beschreibung

Die Erfindung betrifft ein Verfahren und eine Vorrichtung zum Zuführen von Produkten von einem ersten Prozess zu einem zweiten Prozess in einer Verpackungsanlage.

In einer Verpackungsanlage werden verschiedene Prozesse durchgeführt, wie beispielsweise Befüllen, Verschließen oder Kartonieren. Es ist bekannt, für die einzelnen Prozesse jeweils getrennte Maschinen oder Module vorzusehen. Produkte oder Vorprodukte (im Folgenden allgemein als Produkte bezeichnet) werden in jeder Maschine oder jedem Modul entsprechend der Anforderungen gefördert.

Die Produkte werden vor, während oder nach den einzelnen Prozessen mit einer in der Regel durch den Prozess bestimmten Fördergeschwindigkeit und Anordnung gefördert. Die einzelnen Prozesse können dabei unterschiedliche Fördergeschwindigkeiten oder Anordnungen der Produkte erforderlich oder zweckmäßig machen.

Aus US 2015/0375878 A1 ist eine Vorrichtung zum Verteilen von gerollten Produkten bekannt, welche eine Zuführungsstrecke mit einer oder mehreren benachbarten Zuführungsspuren umfasst, wobei jede Zuführspur eine Vielzahl von gerollten Produkten in eine erste Richtung befördert, eine Übergabestrecke, wobei die Übergabestrecke eines oder mehrere der Vielzahl an gerollten Produkten von jeder Zuführspur empfängt. Die Übergabestrecke kann das eine oder die mehreren gerollten Produkte in einer zweiten Richtung, die im Wesentlichen senkrecht zur ersten Richtung verläuft, zu einer Entladestrecke befördern. Die Entladestrecke kann eine oder mehrere benachbarte Entladespuren zur Aufnahme des einen oder der mehreren gerollten Produkte von der Übergabestrecke aufweisen. Die Entladestrecke kann das eine oder die mehreren gerollten Produkte in einer dritten Richtung fördern, die im Wesentlichen parallel zur ersten Richtung verläuft. Die Anzahl der Entladespuren kann gleich, kleiner oder größer als die Anzahl der Zuführspuren sein. Der Übergabeabschnitt weist eine Fördereinrichtung mit daran angebrachten Tragstangen auf, auf welchen die gerollten Produkte abgelegt werden. Ein Abstand der Tragstangen ist dabei für eine Anpassung der Vorrichtung an gerollte Produkte unterschiedlicher Größe variabel. Die genannte Druckschrift offenbart zudem ein Verfahren zum Zuführen von Produkten von einem ersten Prozess zu einem zweiten Prozess in einer Verpackungsanlage, wobei zwischen dem ersten Prozess und dem zweiten Prozess eine Puffervorrichtung vorgesehen ist. Die Puffervorrichtung weist eine geschlossene Förderstrecke mit einer Übernahmeposition zur Übernahme von Produkten in Übernahme-Gruppen von dem ersten Prozess und mit einer Übergabeposition zur Übergabe von Produkten in Übergabe-Gruppen an den zweiten Prozess auf und umfasst mehrere Fördereinheiten, die zumindest abschnittsweise voneinander unabhängig entlang der Förderstrecke antreibbar sind. Die Produkte können von dem ersten Prozess jeweils in Übernahme-Gruppen mit einem variablen ersten Setzmuster bereitgestellt werden, wobei das erste Setzmuster der Übernahme-Gruppen alle durch eine Matrix mit mindestens einer Spalte und mindestens einer Reihe abgebildet werden. Das Verfahren umfasst folgende Schritte: a. Bereitstellen leerer Fördereinheiten an der Übernahmeposition der Puffervorrichtung zur Übernahme der Übernahme-Gruppen, wobei für jede umzusetzende Übernahme-Gruppe Fördereinheiten in Anzahl und Anordnung dem zugehörigen ersten Setzmuster entsprechend bereitgestellt werden, b. Verfahren beladener Fördereinheiten stromabwärts der Übernahmeposition entlang der Puffervorrichtung zur Bildung eines Produktstroms unter Auflösung der Übernahme-Gruppen, c. Bereitstellen beladener Fördereinheiten an der Übergabeposition der Puffervorrichtung, wobei für jede umzusetzende Übergabe-Gruppe beladene Fördereinheiten in Anzahl und Anordnung einem zugehörigen zweiten Setzmuster entsprechend bereitgestellt werden.

Aus US 8,973,735 ist ein Transfermechanismus zum Transfer von Gegenständen zwischen einem oder mehreren Eingangsströmen und einem oder mehreren Ausgangsströmen bekannt, umfassend ein Förderband und eine Vielzahl an Stangen, welche mit dem Förderband gekoppelt sind. Die Stangen können dabei von dem Förderband temporär entkoppelt werden, um eine Förderbewegung der Stangen zu unterbrechen.

Eine ähnliche Gestaltung ist aus US 2015/0158611 A1 bekannt, wobei an dem Förderband anstelle der Stangen Stehkörbe angebracht sind.

Aus JP 2000-142625 A ist eine automatische Eiersortier- und -verpackungsvorrichtung bekannt, umfassend Fördereinheiten, welche voneinander unabhängig entlang einer Förderstrecke antreibbar sind. Eier werden einzeln an die Fördereinheiten übergeben und anschließend in einer Gruppe an einer Übergabeposition übergeben.

Aus JP 2012-031454 A ist eine Anlage mit einer geschlossenen Förderstrecke bekannt, umfassend Fördereinheiten, welche entlang einer Förderstrecke bewegbar sind, um von den Fördereinheiten aufgenommene Produkte verschiedenen Stationen entlang der Förderstrecke zuzuführen.

### AUFGABE UND LÖSUNG

Es ist die Aufgabe der Erfindung ein Verfahren und eine Vorrichtung zum Zuführen von Produkten von einem ersten Prozess zu einem zweiten Prozess in einer Verpackungsanlage zu schaffen, wobei die Produkte von dem ersten Prozess mit einem ersten Setzmuster bereitgestellt werden und wobei zumindest das erste Setzmuster veränderlich ist.

Diese Aufgabe wird durch ein Verfahren nach Anspruch 1 und eine Vorrichtung nach Anspruch 6 gelöst.

Gemäß einem ersten Aspekt wird ein Verfahren nach Anspruch 1 zum Zuführen von Produkten von einem ersten Prozess zu einem zweiten Prozess in einer Verpackungsanlage geschaffen, wobei zwischen dem ersten Prozess und dem zweiten Prozess eine Puffervorrichtung vorgesehen ist, wobei die Puffervorrichtung eine geschlossene Förderstrecke mit einer Übernahmeposition zur Übernahme von Produkten in Übernahme-Gruppen von dem ersten Prozess und mit einer Übergabeposition zur Übergabe von Produkten in Übergabe-Gruppen an den zweiten Prozess und mehrere Fördereinheiten, die zumindest abschnittsweise voneinander unabhängig entlang der Förderstrecke antreibbar sind, aufweist, wobei die Produkte von dem ersten Prozess jeweils in Übernahme-Gruppen mit einem variablen ersten Setzmuster bereitgestellt werden, und wobei erste Setzmuster der Übernahme-Gruppen alle durch eine Matrix mit mindestens einer Spalte und mindestens einer Reihe abgebildet werden, wobei je nach aktuellem Setzmuster alle Positionen der Matrix besetzt sind oder einzelne oder mehrere Positionen der Matrix eine Lücke aufweisen, das Verfahren umfassend a) Bereitstellen leerer Fördereinheiten an der Übernahmeposition der Puffervorrichtung zur Übernahme der Übernahme-Gruppen, wobei für jede umzusetzende Übernahme-Gruppe Fördereinheiten in Anzahl und Anordnung dem zugehörigen ersten Setzmuster entsprechend bereitgestellt werden, b) Verfahren beladener Fördereinheiten stromabwärts der Übernahmeposition entlang der Puffervorrichtung zur Bildung eines Produktstroms unter Auflösung der Übernahme-Gruppen, und c) Bereitstellen beladener Fördereinheiten an der Übergabeposition der Puffervorrichtung, wobei für jede umzusetzende Übergabe-Gruppe beladene Fördereinheiten in Anzahl und Anordnung einem zugehörigen zweiten Setzmuster entsprechend bereitgestellt werden.

Gemäß einem zweiten Aspekt wird eine Vorrichtung nach Anspruch 6 zum Zuführen von Produkten von einem ersten Prozess zu einem zweiten Prozess in einer Verpackungsanlage geschaffen, wobei die Produkte von dem ersten Prozess in Übernahme-Gruppen mit einem variablen ersten Setzmuster bereitstellbar sind, und wobei erste Setzmuster der Übernahme-Gruppen an Produkten alle durch eine Matrix mit mindestens einer Spalte und mindestens einer Reihe abbildbar sind, wobei je nach aktuellem Setzmuster alle Positionen der Matrix besetzt sind oder einzelne oder mehrere Positionen der Matrix eine Lücke aufweisen, die Vorrichtung umfassend eine zwischen dem ersten Prozess und dem zweiten Prozess vorgesehene Puffervorrichtung, wobei die Puffervorrichtung eine geschlossene Förderstrecke mit einer Übernahmeposition zur Übernahme von Produkten in Übernahme-Gruppen von dem ersten Prozess und mit einer Übergabeposition zur Übergabe von Produkten in Übergabe-Gruppen an den zweiten Prozess und mehrere Fördereinheiten, die zumindest abschnittsweise voneinander unabhängig entlang der Förderstrecke antreibbar sind, aufweist, und eine Steuereinrichtung, die eingerichtet und ausgebildet ist, um die Fördereinheiten anzusteuern, sodass a) leere Fördereinheiten an der Übernahmeposition der Puffervorrichtung zur Übernahme der Übernahme-Gruppen bereitstellbar sind, wobei für jede umzusetzende Übernahme-Gruppe Fördereinheiten in Anzahl und Anordnung dem zugehörigen ersten Setzmuster entsprechend bereitstellbar ist, b) beladene Fördereinheiten stromabwärts der Übernahmeposition entlang der Puffervorrichtung zur Bildung eines Produktstroms unter Auflösung der Übernahme-Gruppen verfahrbar sind, und c) beladene Fördereinheiten an der Übergabeposition der Puffervorrichtung bereitstellbar sind, wobei für jede umzusetzende Übergabe-Gruppe beladene Fördereinheiten in Anzahl und Anordnung einem zugehörigen zweiten Setzmuster entsprechend bereitstellbar ist.

Gemäß der Erfindung werden für jeden Umsetzvorgang einer Übernahme-Gruppe von dem ersten Prozess an die Puffervorrichtung nur an den Stellen der Übernahmeposition Fördereinheiten bereitgestellt, an welchen ein Produkt übernommen werden soll. Die Fördereinheiten werden anschließend individuell verfahren, sodass ein Produktstrom gebildet wird, wobei die Zuordnung der Produkte zu einer Übernahme-Gruppe aufgehoben wird. Aus dem Produktstrom können dann Übergabe-Gruppen für den nachfolgenden zweiten Prozess gebildet werden.

Die ersten Setzmuster der von dem ersten Prozess bereitgestellten Gruppen an Produkten sind alle durch eine Matrix mit mindestens einer Spalte und mindestens einer Reihe abbildbar, wobei je nach aktuellem Setzmuster alle Positionen der Matrix besetzt oder einzelne oder mehrere Positionen der Matrix eine Lücke aufweisen. Ein gruppenweises Umsetzen der Produkte ist dabei beispielsweise mittels einer Greifeinrichtung möglich, welcher für jede Position der Matrix eine Greifeinheit aufweist. Sofern an einer Position der Matrix kein Produkt angeordnet ist, ist dies ohne Einfluss auf einen Umsetzvorgang der verbleibenden Produkte der Gruppe. Je nach Ausführungsform führt die Greifeinrichtung für ein Umsetzen der Gruppe an Produkten beispielsweise eine lineare Bewegung, eine Rotationsbewegung oder eine kombinierte Bewegung durch. Dabei ist es auch denkbar, dass die Gruppe an Produkten bei einem Umsetzen verzogen wird, d.h. dass ein Abstand der Produkte innerhalb der Gruppe variiert wird.

In einer Ausgestaltung sind exakt eine Übernahmeposition und exakt eine Übergabeposition vorgesehen. In anderen Ausgestaltungen sind mehr als eine Übernahmeposition und/oder mehr als eine Übergabeposition vorgesehen. Dabei kann insbesondere eine Gestaltung mit mehreren Übergabepositionen vorteilhaft sein, um beispielsweise Produkte von einem schneller arbeitenden ersten Prozess an einen langsameren zweiten Prozess zu übergeben, wobei die Verarbeitung durch den zweiten Prozess mehrspurig erfolgt.

Die Fördereinheiten weisen in einer Ausgestaltung jeweils eigene Antriebe auf. In anderen Ausgestaltungen sind die Fördereinheiten passive Einheiten, wobei die Förderstrecke angesteuert wird, um auf die Fördereinheiten Antriebskräfte zur Bewegung der Fördereinheiten entlang der Förderstrecke aufzubringen. Insbesondere bilden die Förderstrecke und die Fördereinheiten vorzugsweise Linearmotoren, wobei die Förderstrecke eine Statorvorrichtung aufweist und die Fördereinheiten jeweils einen oder mehrere Permanentmagneten. Eine derartige Gestaltung der Puffervorrichtung als Linearmotor-System hat den Vorteil, dass eine individuelle und präzise Ansteuerung der Fördereinheiten möglich ist. Durch ein Verfahren der Produkte in Fördereinheiten ist zudem eine Produktverfolgung möglich, sodass trotz Aufheben der Übernahme-Gruppen feststellbar ist, in welcher Übergabe-Gruppe Produkte aus einer bestimmten Übernahme-Gruppe übergeben wurden.

Es ist für den Fachmann offensichtlich, dass die Erfindung nicht auf zwei Prozesse limitiert ist und in abweichenden Ausgestaltungen mehr als ein Prozess der Puffervorrichtung Produkte zuführt und/oder Produkte von der Puffervorrichtung an mehr als einen Prozess übergeben werden. Ebenso dienen die Bezeichnungen "erstes" und "zweites" lediglich zur Unterscheidung der einzelnen Bauteile oder Prozesse und kennzeichnen weder eine Relevanz noch einen Rang der Bauteile oder Prozesse.

In einer Ausgestaltung werden die Übernahme-Gruppen und/oder die Übergabe-Gruppen gruppenweise, beispielsweise mittels einer Greifeinrichtung, umgesetzt. Durch ein variables Bereitstellen der Fördereinheiten entsprechend dem variablen ersten Setzmuster an der Übernahmeposition ist ein gruppenweises Umsetzen möglich, ohne dass leere Fördereinheiten, d.h. Fördereinheiten ohne ein aufgenommenes Produkt, in einen Bereich stromabwärts der Übernahmeposition, zu der Übergabeposition der Vorrichtung und damit zu dem zweiten Prozess gelangen. Ebenso ist ein gruppenweises Umsetzen der in den Fördereinheiten bereitgestellten Produkte an den zweiten Prozess bei variablem zweiten Setzmuster gruppenweise möglich, ohne dass Produkte an Positionen in dem zweiten Prozess umgesetzt werden, an welchen keine Produkte gewünscht sind-

In einer Ausgestaltung werden fehlerhafte Produkte vor oder bei einer Übergabe an die Puffervorrichtung ausgeschleust, wobei das erste Setzmuster an der Position der ausgeschleusten oder auszuschleusenden Produkte eine Lücke aufweist. Dabei ist in einer Ausgestaltung vorgesehen, dass die auszuschleusenden Produkte mit den umzusetzenden Produkten ergriffen werden. Beim Umsetzen der ersten Gruppe an Produkten werden die auszuschleusenden Produkte an eine Stelle an der Übernahmeposition versetzt, in welcher keine Fördereinheit vorgesehen ist, so dass die Produkte unter Einwirkung der Schwerkraft aussortierbar sind. In anderen Ausgestaltungen werden die Produkte vor einem Umsetzen ausgeschleust, wobei die der Position zugeordnete Greifeinheit "ins Leere" greift.

In einer Ausgestaltung werden die Produkte durch den ersten Prozess in einem Strom an hintereinander in Förderrichtung einzeln angeordneten Produkten bereitgestellt, wobei in einer Ausgestaltung eine Übernahme-Gruppe an in Förderrichtung hintereinander angeordneten Produkten erfasst und auf die Puffervorrichtung umgesetzt wird. In vorteilhaften Ausgestaltungen stellt der erste Prozess die Produkte in einer Förderrichtung in hintereinander angeordneten Reihen bereit, wobei die Übernahme-Gruppe mindestens eine Reihe umfasst. In einer Ausgestaltung umfasst die Übernahme-Gruppe exakt eine Reihe, wobei an einzelnen Positionen der Reihe auszuschleusende Produkte oder Lücken aufgrund bereits ausgeschleuster Produkte vorhanden sein können.

In einer anderen Ausgestaltung umfasst die Übernahme-Gruppe an Produkten N Reihen, mit N größer oder gleich zwei, wobei die Fördereinheiten zumindest an der Übernahmeposition in N Spuren angeordnet werden und die N Reihen in die in N Spuren angeordneten Fördereinheiten umgesetzt werden. In einer Ausgestaltung weist die Förderstrecke über den gesamten Verlauf N Spuren auf, wobei ein Umsetzen aus den N Spuren an N nachfolgende Prozesse oder in Übergabe-Gruppen mit N Reihen denkbar ist. In anderen Ausgestaltungen werden die N Spuren zumindest teilweise zusammengeführt.

Eine Anzahl an Produkten in der Übergabe-Gruppe an den zweiten Prozess entspricht in einer Ausgestaltung einer Soll-Anzahl an Produkten in der Übernahme-Gruppe, wobei etwaige Lücken in dem Setzmuster der Übernahme-Gruppe bei einem Bewegen der Fördereinheiten entlang der Förderstrecke geschlossen werden. In anderen Ausgestaltungen wird die mindestens eine Übergabe-Gruppe an Produkten mit einem variablen zweiten Setzmuster bereitgestellt.

Das erste Setzmuster und das zweite Setzmuster können voneinander abweichen. In einer Ausgestaltung sind die Produkte in der Übernahme-Gruppe und der Übergabe-Gruppe jeweils in einer Reihe angeordnet, wobei die Reihen die gleiche Länge aufweisen, jedoch zumindest eine Gruppe in regelmäßigen oder unregelmäßigen Abständen eine Lücke aufweist. In anderen Ausgestaltungen sind die Produkte in der Übernahme-Gruppe und der Übergabe-Gruppe in Reihen unterschiedlicher Länge angeordnet. Die beladenen Fördereinheiten werden zumindest zeitweise individuell entlang der Förderstrecke bewegt, um so die Produkte aus dem ersten Setzmuster in das zweite Setzmuster zu überführen. Die Produkte werden dabei vorzugsweise in einem kontinuierlichen Produktstrom entlang der Förderstrecke gefördert.

Das Verfahren und/oder die Vorrichtung ist/sind zur Verknüpfung verschiedener Prozesse in einer Verpackungsanlage vorteilhaft einsetzbar. Beispielsweise ist/sind das Verfahren und/oder die Vorrichtung für die Herstellung und Verpackung von Getränkekapseln umfassend eine Kapselfüllmaschine und einen Kartonierer einsetzbar. Mittels der Kapselfüllmaschine wird dabei ein erster Prozess durchgeführt. Von der Kapselfüllmaschine werden befüllte und verschlossene Kapseln bereitgestellt. Die Produkte werden beispielsweise in einer Förderrichtung in hintereinander angeordneten Reihen bereitgestellt. Ziel ist es, ausschließlich korrekt gefüllte und verschlossene Kapseln dem Kartonierer zuzuführen. Um dies zu gewährleisten werden die Produkte vor der Übergabe geprüft und wenn nicht in Ordnung beispielsweise vor oder bei einer Übergabe an die Puffervorrichtung verworfen. Ein Setzmuster der Übernahme-Gruppe an Produkte weist in diesem Fall Lücken auf. Durch ein Bereitstellen der Fördereinheiten entsprechendem einem Setzmuster ist ein gruppenweises Umsetzen an die Puffervorrichtung möglich, ohne dass leere Fördereinheiten von der Übernahmeposition zu der Übergabeposition der Puffervorrichtung transportiert werden und zu unerwünschten Fehlstellen in nachfolgenden Prozessen führen.

Bei dem Kartonieren können die Kapseln je nach Verpackungsanforderung in ein individuelles Setzmuster überführt werden. Dies ist effektiv möglich, da die zugeführten Produkte aus der Kapselfüllmaschine in der Puffervorrichtung in eine reproduzierbare Ordnung ohne Fehlstellen überführt werden.

### KURZBESCHREIBUNG DER ZEICHNUNGEN

Weitere Vorteile der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1:: schematisch ein erstes Ausführungsbeispiel einer Vorrichtung zum Zuführen von Produkten von einem ersten Prozess zu einem zweiten Prozess in einer Verpackungsanlage mit einer Puffervorrichtung,
- Fig. 2:: schematisch die Schritte eines Verfahrens zum Zuführen von Produkten aus einem ersten Prozess zu einer Puffervorrichtung;
- Fig. 3:: schematisch die Schritte eines Verfahrens zum Zuführen von Produkten aus einer Puffervorrichtung zu einem zweiten Prozess;
- Fig. 4:: schematisch ein zweites Ausführungsbeispiel einer Vorrichtung zum Zuführen von Produkten von einem ersten Prozess zu einem zweiten Prozess in einer Verpackungsanlage mit einer Puffervorrichtung,
- Fig. 5:: schematisch ein drittes Ausführungsbeispiel einer Vorrichtung zum Zuführen von Produkten von einem ersten Prozess zu einem zweiten Prozess in einer Verpackungsanlage mit einer Puffervorrichtung, und
- Fig. 6:: ein Detail einer Vorrichtung ähnlich Fig. 5.

### DETAILLIERTE BESCHREIBUNG DER AUSFÜHRUNGSBEISPIELE

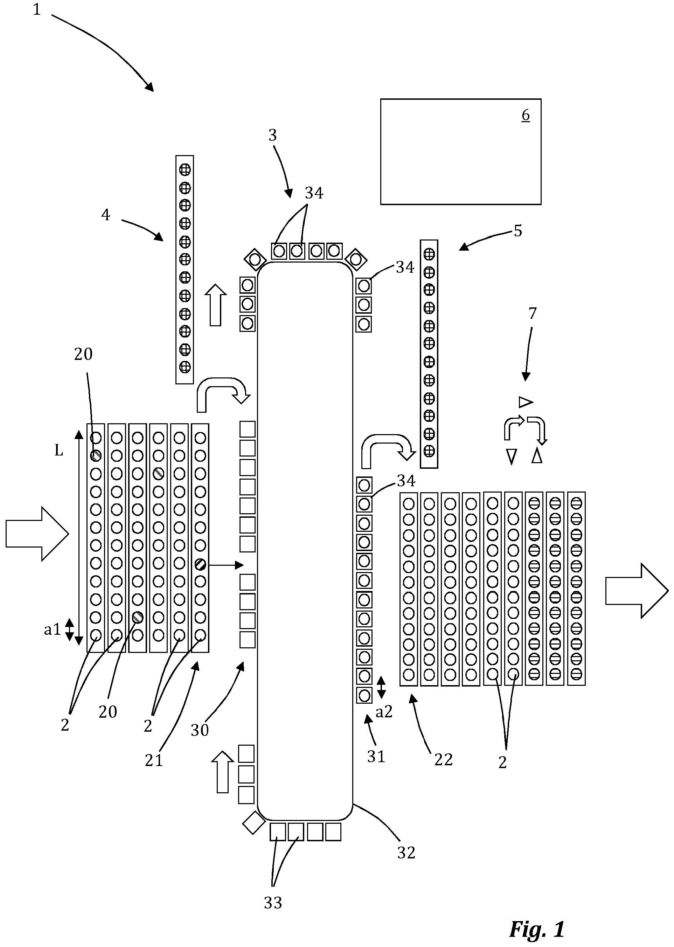

Fig. 1 zeigt schematisch eine Vorrichtung 1 zum Zuführen von Produkten 2 von einem ersten Prozess zu einem zweiten Prozess in einer Verpackungsanlage. Die Vorrichtung umfasst eine zwischen dem ersten Prozess und dem zweiten Prozess vorgesehene Puffervorrichtung 3, eine erste Greifeinrichtung 4 zum Umsetzen von Produkten 2 von dem ersten Prozess zu der Puffervorrichtung 3, eine zweite Greifeinrichtung 5 zum Umsetzen von Produkten 2 von der Puffervorrichtung 3 zu dem zweiten Prozess und eine Steuereinrichtung 6. In dem dargestellten Ausführungsbeispiel ist weiter eine Wendeeinrichtung 7 für die als Kapseln gestalteten Produkte 2 vorgesehen.

Die Puffervorrichtung 3 umfasst eine geschlossene Förderstrecke 32 mit einer Übernahmeposition 30 zur Übernahme von Produkten 2 von dem ersten Prozess und einer Übergabeposition 31 zur Übergabe von Produkten 2 an den zweiten Prozess sowie mehrere Fördereinheiten 33, 34, die zumindest abschnittsweise voneinander unabhängig entlang der Förderstrecke 32 antreibbar sind. Vorzugsweise sind die Fördereinheiten 33, 34, entlang der gesamten Förderstrecke 32 voneinander unabhängig antreibbar. Die dargestellte Anzahl der Fördereinheiten 33, 34 ist dabei lediglich beispielhaft.

Die Produkte 2 werden in dem dargestellten Ausführungsbeispiel von dem ersten Prozess in hintereinander angeordneten Reihen bereitgestellt. In dem Ausführungsbeispiel sind maximal zwölf Produkte 2 in jeder Reihe vorgesehen. Die durch einen Doppelpfeil angedeutete Länge L der Reihen ist jedoch lediglich beispielhaft. Die Produkte 2 sind in den Reihen mit einem Abstand a1 angeordnet.

Von dem ersten Prozess bereitgestellte Gruppen an Produkten 2 werden als Übernahme-Gruppen 21 bezeichnet. Die Übernahme-Gruppen 21 umfassen in dem dargestellten Ausführungsbeispiel jeweils eine Reihe. Diese Gruppen werden mittels der Greifeinrichtung 4 an die Puffervorrichtung 3 übergeben. Die Anordnung der Produkte 2 in einer Übernahme-Gruppe 21, d.h. in dem dargestellten Ausführungsbeispiel in einer Reihe, wird als Setzmuster oder erstes Setzmuster bezeichnet. Das Setzmuster kann dabei zwischen den nacheinander umzusetzenden Übernahme-Gruppen 21 variieren. Insbesondere können in den Reihen fehlerhafte und daher auszuschleusende Produkte oder Lücken 20 an Positionen von bereits ausgeschleusten Produkten 2 vorhanden sein.

Das Setzmuster der als nächstes umzusetzenden Übernahme-Gruppe 21 an Produkten 2 ist aufgrund vorangehender Prüfprozesse bekannt und der Steuereinrichtung 6 übermittelt oder wird mittels der Steuereinrichtung 6 erfasst. Mittels der Steuereinrichtung 6 wird eine entsprechende Anzahl an in dem erfassten Setzmuster angeordneten leeren Fördereinheiten 33 positionsgerecht an der Übernahmeposition 30 der Puffervorrichtung 3 bereitgestellt. Anschließend wird die umzusetzende Übernahme-Gruppe 21 mittels der ersten Greifeinrichtung 4 ergriffen und die Produkte 2 der Übernahme-Gruppe 21 werden gemeinsam in die an der Übernahmeposition 30 bereitgestellten leeren Fördereinheiten 33 der Puffervorrichtung 3 umgesetzt.

Die derart beladenen Fördereinheiten 34 werden anschließend zu der Übergabeposition 31 für den zweiten Prozess bewegt, wobei die Übernahme-Gruppen 21 unter Bildung eines Produktstroms aufgelöst werden. An der Übergabeposition 31 werden beladene Fördereinheiten 34 für den zweiten Prozess bereitgestellt. Die für den zweiten Prozess bereitgestellten Gruppen an Produkten werden als Übergabe-Gruppen 22 bezeichnet. Für ein Umsetzen wird jeweils eine Übergabe-Gruppe 22 mittels der zweiten Greifeinrichtung 5 gegriffen und übergeben.

Ein Setzmuster der Übergabe-Gruppe 22 wird als zweites Setzmuster bezeichnet. Die beladene Fördereinheiten 34 werden in Anzahl und Anordnung diesem zweiten Setzmuster entsprechend bereitgestellt.

Das zweite Setzmuster ist in dem dargestellten Ausführungsbeispiel unverändert für aufeinanderfolgende Übergabe-Gruppe 22 oder konstant. In anderen Ausgestaltungen kann das zweite Setzmuster ebenfalls zwischen den umzusetzenden Gruppen variieren. In dem Ausführungsbeispiel umfasst das zweite Setzmuster jeweils zwölf in einer Reihe angeordnete Produkte 2. Das dargestellte zweite Setzmuster ist jedoch ebenfalls lediglich beispielhaft.

Durch einen individuellen Transport der beladenen Fördereinheiten 34 zwischen der Übernahmeposition 30 und der Übergabeposition 31 können dabei Lücken in dem ersten Setzmuster ausgeglichen werden, sodass an der Übergabeposition 31 jeweils zwölf Fördereinheiten 34 mit Produkten bereitgestellt werden.

In anderen Ausgestaltungen sind die maximale Anzahl an Produkten 2 in dem zweiten Setzmuster und die maximale Anzahl an Produkten 2 in dem ersten Setzmuster verschieden gewählt.

Die Anordnung der Produkte 2 für den zweiten Prozess ist in dem dargestellten Ausführungsbeispiel kompakter, d.h. ein Abstand a2 der Produkte 2 ist kleiner als der Abstand a1 in dem ersten Prozess. Ein Versatz der Produkte in Längsrichtung der Reihen erfolgt dabei beispielsweise bei einem Umsetzen von der Puffereinrichtung 3 an den zweiten Prozess.

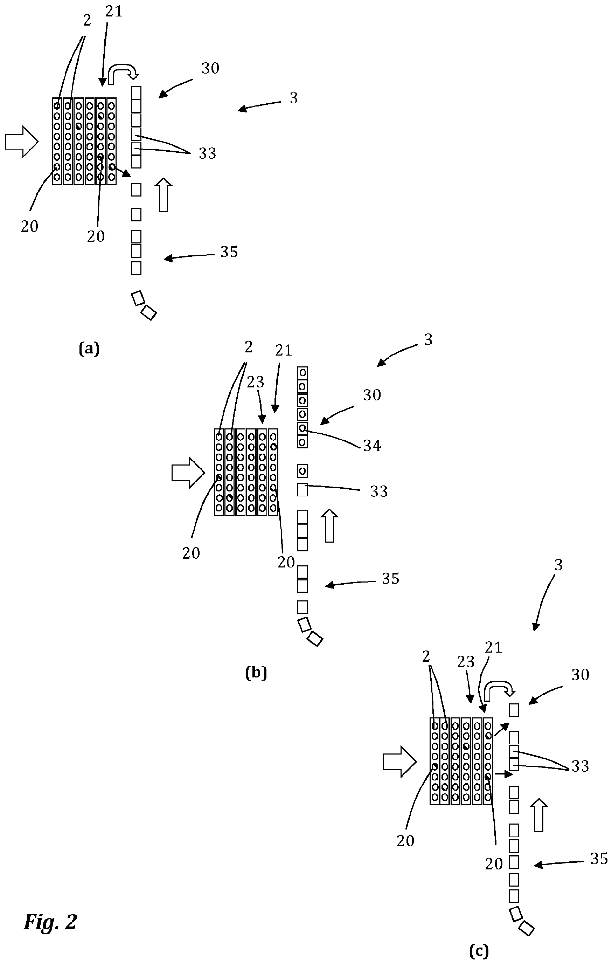

Fig. 2 zeigt schematisch einen möglichen Ablauf beim Umsetzen der Produkte 2 von dem ersten Prozess zu der in Fig. 2 nur teilweise dargestellten Puffervorrichtung 3.

Zunächst wird das erste Setzmuster einer nachfolgend umzusetzenden Übernahme-Gruppe 21 an Produkten 2 des ersten Prozesses erfasst. Ein Erfassen ist dabei unmittelbar bei Erreichen der Übergabeposition des ersten Prozesses oder bereits zu einem früheren Zeitpunkt möglich. Wie in Fig. 2a dargestellt, wird eine erforderliche Anzahl an Fördereinheiten 33 entsprechend dem erfassten Setzmuster der umzusetzenden Übernahme-Gruppe 21 vor der Übernahmeposition 30 auf einer Vorposition 35 positioniert.

Wie in Fig. 2b dargestellt, werden mit einer Freigabe die beladenen Fördereinheiten 34 von der Übernahmeposition 30 weg bewegt. Gleichzeitig oder zeitversetzt werden die Fördereinheiten 33 von der Vorposition 35 in die Übernahmeposition 30 bewegt. Zu diesem Zeitpunkt liegen an der Steuereinheit 6 vorzugsweise bereits Daten über ein Setzmuster der nachfolgenden Übernahme-Gruppe 23 vor, beispielsweise wurde das erste Setzmuster der nachfolgenden Übernahme-Gruppe 23 optisch und/oder mittels einer Wiegeeinrichtung erfasst, sodass die leeren Fördereinheiten 33 für die nachfolgend umzusetzende Übernahme-Gruppe 23 entsprechend in der Vorposition 35 positionierbar sind.

Wie in Fig. 2c dargestellt, wird die umzusetzende Übernahme-Gruppe 21 umgesetzt, sobald die Fördereinheiten 33 an der Übernahmeposition bereitgestellt sind. Die Fördereinheiten 33 für die nachfolgende Übernahme-Gruppe 23 sind in der Vorposition 35. Ein erstes Setzmuster für eine weitere Übernahme-Gruppe kann durch die Steuereinheit 6 erfasst oder ausgewertet werden und der Ablauf kann entsprechend wiederholt werden.

Ein Bewegen der leeren Fördereinheiten 33 in die Übernahmeposition 30 und ein Umsetzen der Gruppen kann dabei auf eine Fördergeschwindigkeit des ersten Prozesses angepasst werden.

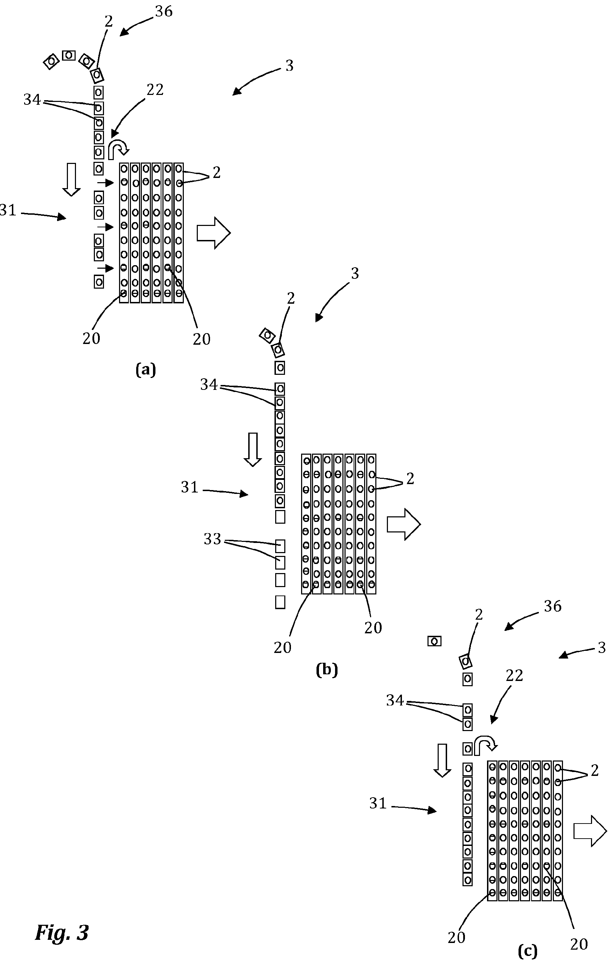

Fig. 3 zeigt schematisch einen möglichen Ablauf beim Umsetzen der Produkte 2 von der in Fig. 3 nur teilweise dargestellten Puffervorrichtung 3 zu dem zweiten Prozess. Bei dem in Fig. 3 dargestellten Ablauf werden die Produkte 2 mit einem variablen zweiten Setzmuster an den zweiten Prozess übergeben.

Hierfür werden wie in Fig. 3a dargestellt, die Produkte 2 in den beladenen Fördereinheiten 34 in einem gewünschten Setzmuster in der Übergabeposition 31 positioniert und die so geschaffene Übergabe-Gruppe 22 umgesetzt. In einer Vorposition 36 sind dabei bereits die Fördereinheiten 34 mit den Produkten 2 entsprechend dem zweiten Setzmuster für eine nachfolgend umsetzende Übergabe-Gruppe positioniert.

Wie in Fig. 3b dargestellt, werden mit einer Freigabe die entladenen Fördereinheiten 33 von der Übergabeposition 31 weg bewegt. Gleichzeitig oder zeitversetzt werden die beladenen Fördereinheiten 34 von der Vorposition 36 in die Übergabeposition 31 bewegt. Zu diesem Zeitpunkt ist in vorteilhaften Ausgestaltungen bereits das zweite Setzmuster der nachfolgenden Übergabe-Gruppe 22 bekannt, sodass die beladenen Fördereinheiten 34 für die nachfolgend umzusetzende Übergabe-Gruppe 22 entsprechend in der Vorposition 36 positionierbar sind.

Wie in Fig. 3c dargestellt, wird die Übergabe-Gruppe 22 an Produkten 2 umgesetzt, sobald die Fördereinheiten 34 an der Übergabeposition 31 bereitgestellt sind. Die mit Produkten 2 beladenen Fördereinheiten 34 für die nachfolgende Gruppe sind in der Vorposition 36.

Das zweite Setzmuster variiert in dem in Fig. 3 dargestellten Ausführungsbeispiel gemäß einem regelmäßigen Muster. Es sind jedoch auch unregelmäßige Muster denkbar.

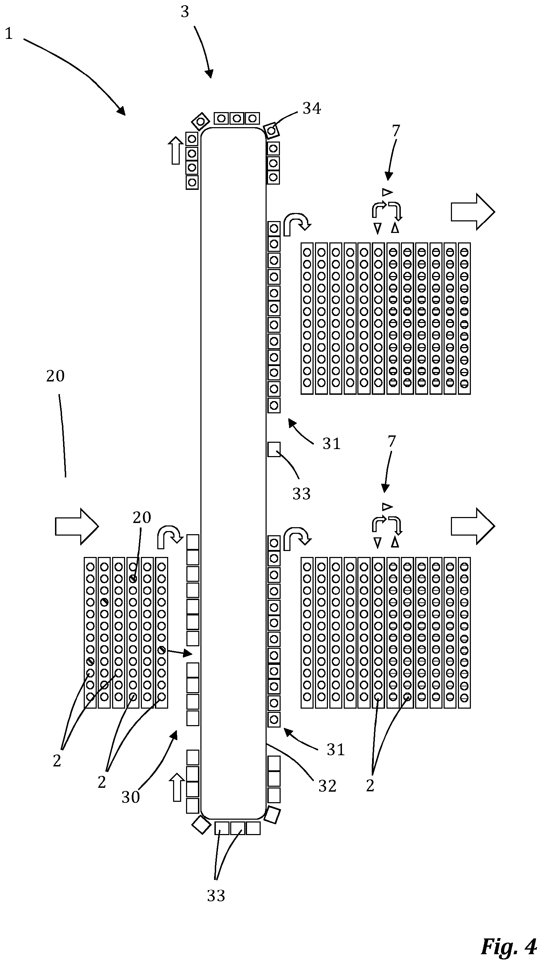

Fig. 4 zeigt schematisch ein zweites Ausführungsbeispiel einer Vorrichtung 1 zum Zuführen von Produkten 2 von einem ersten Prozess zu einem zweiten Prozess in einer Verpackungsanlage. Die in Fig. 4 dargestellte Vorrichtung 1 entspricht im Wesentlichen der in Fig. 1 dargestellten Vorrichtung 1 und für gleiche Bauteile werden einheitliche Bezugszeichen verwendet. Auf eine erneute Beschreibung bereits beschriebener Bauteile wird verzichtet. Die Vorrichtung 1 gemäß Fig. 4 umfasst eine Puffervorrichtung 3 sowie in Fig. 4 aus Gründen der Übersichtlichkeit nicht dargestellte Greifeinrichtungen 4, 5 und eine ebenfalls nicht dargestellte Steuereinrichtung 6.

Im Unterschied zu dem in Fig. 1 dargestellten Ausführungsbeispiel ist der zweite Prozess gemäß Fig. 4 zweispurig gestaltet, sodass die Produkte 2 an zwei Übergabepositionen 31 an den zweiten Prozess übergeben werden. Dies ist insbesondere von Vorteil, wenn der erste Prozess mit einer deutlich höheren Prozessgeschwindigkeit betrieben werden kann. Bei dem ersten Prozess handelt es sich beispielsweise um ein Befüllen und Verschließen von Behältern, insbesondere von Kapseln, und bei dem zweiten Prozess um ein Kartonieren der Produkte 2. In dem dargestellten Ausführungsbeispiel werdend dabei leere Fördereinheiten 33 in einem Bereich zwischen den zwei Übergabepositionen 31 gefördert. In anderen Ausgestaltungen werden die Gruppen für beide Übergabepositionen 31 in einer gemeinsamen Vorposition vorbereitet, die Gruppen gleichzeitig an beide Übergabepositionen 31 gefördert und gleichzeitig nach einem Entladen in einen Bereich stromabwärts der stromabwärts liegenden Übergabeposition 31 gefördert. In wieder anderen Ausgestaltungen sind an der Puffervorrichtung 31 Nebenstrecken für eine parallele Bewegung der leeren und belandenen Fördereinheiten 33, 34 vorgesehen.

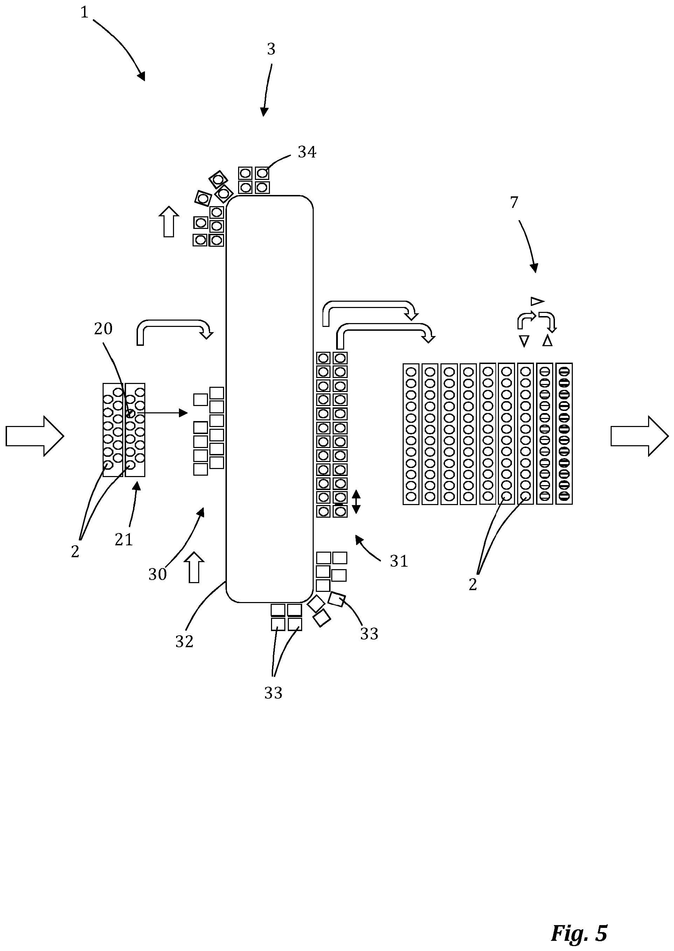

Fig. 5 zeigt schematisch ein drittes Ausführungsbeispiel einer Vorrichtung 1 zum Zuführen von Produkten 2 von einem ersten Prozess zu einem zweiten Prozess in einer Verpackungsanlage. Die in Fig. 5 dargestellte Vorrichtung 1 entspricht ebenfalls im Wesentlichen der in Fig. 1 dargestellten Vorrichtung 1 und für gleiche Bauteile werden erneut einheitliche Bezugszeichen verwendet. Die Vorrichtung 1 gemäß Fig. 4 umfasst eine Puffervorrichtung 3 sowie in Fig. 4 aus Gründen der Übersichtlichkeit nicht dargestellte Greifeinrichtungen 4, 5 und eine ebenfalls nicht dargestellte Steuereinrichtung 6.

Im Unterschied zu dem in Fig. 1 dargestellten Ausführungsbeispiel umfassen die von dem ersten Prozess bereitgestellten und umzusetzenden Übernahme-Gruppen 21 jeweils zwei versetzt zueinander in Förderrichtung hintereinander angeordnete Reihen. Die dargestellte Förderstrecke 32 weist dabei zwei parallele Spuren auf, sodass die leeren Fördereinheiten 33 an der Übergabeposition 30 in zwei Spuren anordenbar sind und die zwei Reihen der Übernahme-Gruppe 21 in die in zwei Spuren angeordneten leeren Fördereinheiten 33 umsetzbar sind. Die leeren und beladenen Fördereinheiten 33, 34 sind dabei in jeder Spur unabhängig von den Fördereinheiten 33, 34 der anderen Spur verfahrbar. Dadurch sind etwaige Lücken in dem Setzmuster für jede Spur individuell ausgleichbar.

Für eine Übergabe der Produkte 2 an den zweiten Prozess werden die beladenen Fördereinheiten 34 in dem in Fig. 5 dargestellten Ausführungsbeispiel ebenfalls in den zwei Spuren angeordnet. Ein Umsetzen der Produkte an den zweiten Prozess erfolgt jedoch in dem dargestellten Ausführungsbeispiel getrennt mittels zwei nicht dargestellten Greifeinheiten, deren Bewegung durch Pfeile schematisch angedeutet ist. Dabei wird, wie durch einen Doppelpfeil angedeutet, auch ein Abstand der Produkte 2 in einer Reihe verändert. In anderen Ausgestaltungen erfolgt ein Umsetzen der Produkte an den zweiten Prozess ebenfalls in einer Übergabe-Gruppe mit zwei Reihen. In wieder anderen Ausgestaltungen weist die Förderstrecke 32 lediglich im Bereich der Übernahmeposition 30 zwei Spuren auf, wobei die Spuren anschließend an die Übernahmeposition 30 wieder zu einer Spur zusammengeführt werden und die Produkte 2 in den beladenen Fördereinheiten 34 an der Übergabeposition 31 wie in Fig. 1 dargestellt in nur einer Reihe bereitgestellt werden.

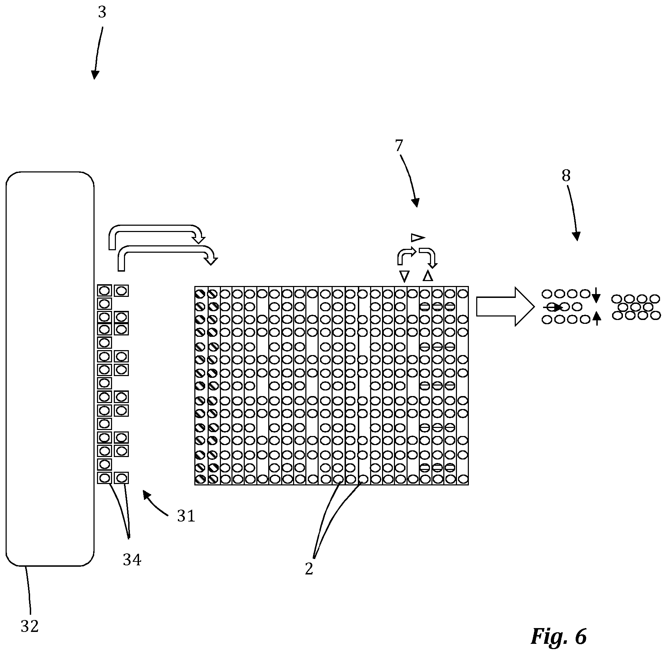

Fig. 6 zeigt schematisch eine Übergabeposition 31 einer Puffervorrichtung 3 ähnlich Fig. 5, wobei Produkte 2 in beladenen Fördereinheiten 34 an der Übergabeposition 31 einer Förderstrecke 32 in zwei Spuren bereitgestellt werden. In jeder Spur werden dabei die beladenen Fördereinheiten 34 entsprechenden einem für jeden Umsetzvorgang individuell konfigurierbaren zweiten Setzmuster angeordnet.

In dem in Fig. 6 schematisch dargestellten zweiten Prozess wird ein Teil der Produkte 2 mittels einer Wendeeinrichtung 7 gewendet und anschließend mittels einer Verzugeinrichtung 8 eine Packungsdichte der Produkte 2 variiert.

Bei jedem der dargestellten Ausführungsbeispiele ist es möglich, Lücken in den Setzmustern des ersten Prozesses vor einer Übergabe der Produkte an den zweiten Prozess zu kompensieren und/oder Lücken in den von dem ersten Prozess übernommenen Übernahme-Gruppen für den zweiten Prozess zu erzeugen.

Es ist für den Fachmann offensichtlich, dass die Erfindung nicht auf die beschriebenen Ausführungsbeispiele beschränkt ist, sondern durch die Ansprüche definiert wird.

Die Vorrichtung und das Verfahren sind insbesondere zur Kombination einer Kapselfüllmaschine mit einem (einspurigen oder mehrspurigen) Kartonierer vorteilhaft einsetzbar. Die Vorrichtung erlaubt dabei ein Umsetzen von befüllten und verschlossenen Kunststoffkapseln ebenso wie ein Umsetzen von in der Handhabung empfindlicheren Aluminiumkapseln. Die Vorrichtung und das Verfahren durch welche eine Kapselfüllmaschine und ein Kartonierer miteinander verknüpft werden, sind dabei sowohl mit einem geringen Platzbedarf als auch mit einer hohen Leistung realisierbar.

## Patentansprüche

1. Verfahren zum Zuführen von Produkten (2) von einem ersten Prozess zu einem zweiten Prozess in einer Verpackungsanlage, wobei zwischen dem ersten Prozess und dem zweiten Prozess eine Puffervorrichtung (3) vorgesehen ist, wobei die Puffervorrichtung (3) eine geschlossene Förderstrecke (32) mit einer Übernahmeposition (30) zur Übernahme von Produkten (2) in Übernahme-Gruppen (21, 23) von dem ersten Prozess und mit einer Übergabeposition (31) zur Übergabe von Produkten (2) in Übergabe-Gruppen an den zweiten Prozess und mehrere Fördereinheiten (33, 34), die zumindest abschnittsweise voneinander unabhängig entlang der Förderstrecke (32) antreibbar sind, aufweist, und wobei die Produkte (2) von dem ersten Prozess jeweils in Übernahme-Gruppen (21, 23) mit einem ersten Setzmuster bereitgestellt werden, das Verfahren umfassend:
a. Bereitstellen leerer Fördereinheiten (33) an der Übernahmeposition (30) der Puffervorrichtung (3) zur Übernahme der Übernahme-Gruppen (21, 23), wobei für jede umzusetzende Übernahme-Gruppe (21) Fördereinheiten (33) in Anzahl und Anordnung dem zugehörigen ersten Setzmuster entsprechend bereitgestellt werden,
wobei
die Produkte (2) von dem ersten Prozess jeweils in Übernahme-Gruppen (21, 23) mit einem variablen ersten Setzmuster bereitgestellt werden, wobei erste Setzmuster der Übernahme-Gruppen (21, 23) alle durch eine Matrix mit mindestens einer Spalte und mindestens einer Reihe abgebildet werden, und wobei je nach aktuellem Setzmuster alle Positionen der Matrix besetzt sind oder einzelne oder mehrere Positionen der Matrix eine Lücke aufweisen, und wobei das Verfahren weiter umfasst:
b. Verfahren beladener Fördereinheiten (34) stromabwärts der Übernahmeposition (30) entlang der Puffervorrichtung (3) zur Bildung eines Produktstroms unter Auflösung der Übernahme-Gruppen (21, 23) und
c. Bereitstellen beladener Fördereinheiten (34) an der Übergabeposition (31) der Puffervorrichtung (3), wobei für jede umzusetzende Übergabe-Gruppe (22) beladene Fördereinheiten (34) in Anzahl und Anordnung einem zugehörigen zweiten Setzmuster entsprechend bereitgestellt werden.

2. Verfahren nach Anspruch 1, **dadurch gekennzeichnet, dass** die Übernahme-Gruppen (21, 23) und/oder die Übergabe-Gruppen (22) gruppenweise umgesetzt werden.

3. Verfahren nach Anspruch 1 oder 2, **dadurch gekennzeichnet, dass** fehlerhafte Produkte vor oder bei einer Übergabe von dem ersten Prozess an die Puffervorrichtung (3) ausgeschleust werden und das erste Setzmuster an der Position der ausgeschleusten oder auszuschleusenden Produkte eine Lücke (20) aufweist.

4. Verfahren nach einem der Ansprüche 1 bis 3, **dadurch gekennzeichnet, dass** der erste Prozess die Produkte in einer Förderrichtung in hintereinander angeordneten Reihen bereitstellt, wobei die durch den ersten Prozess bereitgestellten Übernahme-Gruppen (21, 23) jeweils mindestens eine Reihe umfassen, wobei insbesondere die bereitgestellten Gruppe an Produkten (2) jeweils N Reihen umfasst, mit N größer oder gleich zwei, wobei die Fördereinheiten (33) zumindest an der Übernahmeposition (30) in N Spuren angeordnet werden und die N Reihen in die in N Spuren angeordneten Fördereinheiten (33) umgesetzt werden.

5. Verfahren nach einem der Ansprüche 1 bis 4, **dadurch gekennzeichnet, dass** die Übergabe-Gruppe an Produkten mit einem variablen zweiten Setzmuster bereitgestellt wird.

6. Vorrichtung zum Zuführen von Produkten (2) von einem ersten Prozess zu einem zweiten Prozess in einer Verpackungsanlage, wobei die Produkte (2) von dem ersten Prozess in Übernahme-Gruppen (21, 23) mit einem ersten Setzmuster bereitstellbar sind, umfassend
- den ersten und zweiten Prozess,
- eine zwischen dem ersten Prozess und dem zweiten Prozess vorgesehene Puffervorrichtung (3), wobei die Puffervorrichtung eine geschlossene Förderstrecke (32) mit einer Übernahmeposition (30) zur Übernahme von Produkten (2) in Übernahme-Gruppen (21, 23) von dem ersten Prozess und mit einer Übergabeposition (31) zur Übergabe von Produkten (2) in Übergabe-Gruppen (22) an den zweiten Prozess und mehrere Fördereinheiten (33, 34), die zumindest abschnittsweise voneinander unabhängig entlang der Förderstrecke (32) antreibbar sind, aufweist, und
- eine Steuereinrichtung (6), die eingerichtet und ausgebildet ist, um die Fördereinheiten (33, 34) anzusteuern, sodass
a. leere Fördereinheiten (33) an der Übernahmeposition (30) der Puffervorrichtung (3) zur Übernahme der Übernahme-Gruppen (21, 23) bereitstellbar sind, wobei für jede umzusetzende Übernahme-Gruppe (21, 23) Fördereinheiten (33) in Anzahl und Anordnung dem zugehörigen ersten Setzmuster entsprechend bereitstellbar ist,
wobei
die Produkte (2) von dem ersten Prozess in Übernahme-Gruppen (21, 23) mit einem variablen ersten Setzmuster bereitstellbar sind, wobei erste Setzmuster der Übernahme-Gruppen (21, 23) an Produkten (2) alle durch eine Matrix mit mindestens einer Spalte und mindestens einer Reihe abbildbar sind, wobei je nach aktuellem Setzmuster alle Positionen der Matrix besetzt sind oder einzelne oder mehrere Positionen der Matrix eine Lücke aufweisen, und wobei die Steuereinrichtung (6) eingerichtet und ausgebildet ist, um die Fördereinheiten (33, 34) anzusteuern, sodass
b. beladene Fördereinheiten (34) stromabwärts der Übernahmeposition (30) entlang der Puffervorrichtung (3) zur Bildung eines Produktstroms unter Auflösung der Übernahme-Gruppen (21, 23) verfahrbar sind, und
c. beladene Fördereinheiten (34) an der Übergabeposition (31) der Puffervorrichtung (3) bereitstellbar sind, wobei für jede umzusetzende Übergabe-Gruppe (22) beladene Fördereinheiten (34) in Anzahl und Anordnung einem zugehörigen zweiten Setzmuster entsprechend bereitstellbar ist.

7. Vorrichtung nach Anspruch 6, **dadurch gekennzeichnet, dass** mindestens eine Greifeinrichtung vorgesehen ist, mittels welcher die Übernahme-Gruppen (21, 23) und/oder die Übergabe-Gruppen (22) gruppenweise umsetzbar sind.

8. Vorrichtung nach Anspruch 6 oder 7, **dadurch gekennzeichnet, dass** mittels der Steuereinrichtung (6) fehlerhafte Produkte vor oder bei einer Übergabe an die Puffervorrichtung erfassbar und ausschleusbar sind, wobei das erste Setzmuster an der Position der ausgeschleusten Produkte eine Lücke (20) aufweist.

9. Vorrichtung nach einem der Ansprüche 6 bis 8, **dadurch gekennzeichnet, dass** von dem ersten Prozess die Produkte (2) in hintereinander angeordneten Reihen bereitgestellt sind, wobei die von dem ersten Prozess bereitgestellten Übernahme-Gruppen jeweils mindestens eine Reihe umfassen, wobei insbesondere die Übernahme-Gruppen jeweils N Reihen umfassen, mit N größer oder gleich zwei, wobei die Förderstrecke (32) zumindest an der Übernahmeposition (30) N Spuren aufweist, sodass die Fördereinheiten (33) zumindest an der Übergabeposition (30) in N Spuren anordenbar sind und die N Reihen in die in N Spuren angeordneten Fördereinheiten (33) umsetzbar sind.

10. Vorrichtung nach einem der Ansprüche 6 bis 9, **dadurch gekennzeichnet, dass** die Steuereinrichtung (6) weiter eingerichtet und ausgebildet ist, um beladene Fördereinheiten (33) mit Produkten (2) zwischen der Übernahmeposition (30) und der Übergabeposition (31) zur Bildung einer zweiten Gruppe an Produkten zu bewegen, und um die zweite Gruppe an Produkten (2) an der Übergabeposition (31) bereitzustellen, wobei insbesondere die mindestens eine zweite Gruppe an Produkten (2) mit einem variablen Setzmuster an der Übergabeposition (31) bereitstellbar ist.

## Claims

1. A method for feeding products (2) from a first process to a second process in a packaging plant, wherein a buffer device (3) is provided between the first process and the second process, wherein the buffer device (3) has a closed conveying section (32) having a receiving position (30) for receiving products (2) in receiving groups (21, 23) from the first process, and having a transfer position (31) for transferring products (2) in transfer groups to the second process, and a plurality of conveying units (33, 34) which at least in portions along the conveying section (32) can be driven in a mutually independent manner, and wherein the products (2) from the first process are in each case provided in receiving groups (21, 23) with a first placing pattern, the method comprising the following steps:
a) providing empty conveying units (33) for receiving the receiving groups (21, 23) at the receiving position (30) of the buffer device (3), wherein conveying units (33) which in terms of their number and arrangement correspond to the associated first placing pattern are provided for each receiving group (21) to be relocated,
wherein the products (2) from the first process are in each case provided in receiving groups (21, 23) with a variable first placing pattern, wherein all first placing patterns of the receiving groups (21, 23) are represented by a matrix having at least one column and at least one row, and wherein, depending on the current placing pattern, all positions of the matrix are occupied or individual or a plurality of positions of the matrix have a gap,
and wherein the method further comprises:
b) displacing loaded conveying units (34) along the buffer device (3) downstream of the receiving position (30) so as to form a product stream while ungrouping the receiving groups (21, 23),
c) providing loaded conveying units (34) at the transfer position (31) of the buffer device (3), wherein loaded conveying units (34) which in terms of their number and arrangement correspond to an associated second placing pattern are provided for each transfer group (22) to be relocated.

2. The method as claimed in claim 1, **characterized in that** the receiving groups (21, 23) and/or the transfer groups (22) are relocated in groups.

3. The method as claimed in claim 1 or 2, **characterized in that** defective products are ejected before or when being transferred from the first process to the buffer device (3), and the first placing pattern has a gap (20) at the position of the products ejected or to be ejected.

4. The method as claimed in one of claims 1 to 3, **characterized in that** the first process provides the products so as to be in rows disposed behind one another in a conveying direction, wherein the receiving groups (21, 23) provided by the first process comprise in each case at least one row, wherein the provided group of products (2) comprises in particular in each case N rows, where N is greater than or equal to two, wherein the conveying units (33) at least at the receiving position (30) are disposed in N tracks and the N rows are relocated into the conveying units (33) disposed in N tracks.

5. The method as claimed in one of claims 1 to 4, **characterized in that** the transfer group of products is provided with a variable second placing pattern.

6. A device for feeding products (2) from a first process to a second process in a packaging plant, wherein the products (2) from the first process can be provided in receiving groups (21, 23) with a first placing pattern, said device comprising
- the first process and the second process,
- a buffer device (3) which is provided between the first process and the second process, wherein the buffer device has a closed conveying section (32) having a receiving position (30) for receiving products (2) in receiving groups (21, 23) from the first process, and having a transfer position (31) for transferring products (2) in transfer groups (22) to the second process, and a plurality of conveying units (33, 34) which at least in portions along the conveying section (32) can be driven in a mutually independent manner, and
- a control installation (6) which is specified and configured for actuating the conveying units (33, 34) such that
a) empty conveying units (33) for receiving the receiving groups (21, 23) can be provided at the receiving position (30) of the buffer device (3), wherein conveying units (33) which in terms of their number and arrangement correspond to the associated first placing pattern can be provided for each receiving group (21, 23) to be relocated,
wherein the products (2) from the first process can be provided in receiving groups (21, 23) with a variable first placing pattern, wherein all first placing patterns of the receiving groups (21, 23) of products (2) can be represented by a matrix having at least one column and at least one row, wherein, depending on the current placing pattern, all positions of the matrix are occupied, or individual or a plurality of positions of the matrix have a gap, and wherein the control installation (6) is specified and configured for actuating the conveying units (33, 34) such that
b) loaded conveying units (34) can be displaced along the buffer device (3) downstream of the receiving position (30) so as to form a product stream while ungrouping the receiving groups (21, 23), and
c) loaded conveying units (34) can be provided at the transfer position (31) of the buffer device (3), wherein loaded conveying units (34) which in terms of their number and arrangement correspond to an associated second placing pattern can be provided for each transfer group (22) to be relocated.

7. The device as claimed in claim 6, **characterized in that** at least one gripping installation by means of which the receiving groups (21, 23) and/or the transfer groups (22) can be relocated in groups is provided.

8. The device as claimed in claim 6 or 7, **characterized in that** defective products can be detected and ejected before or when being transferred to the buffer device by the control installation (6), wherein the first placing pattern has a gap (20) at the position of the ejected products.

9. The device as claimed in one of claims 6 to 8, **characterized in that** the products (2) by the first process are provided so as to be in rows disposed behind one another, wherein the receiving groups provided by the first process comprise in each case at least one row, wherein the receiving groups comprise in particular in each case N rows, where N is greater than or equal to two, wherein the conveying section (32) at least at the receiving position (30) has N tracks such that the conveying units (33) can be disposed in N tracks at least at the transfer position (30), and the N rows can be relocated into the conveying units (33) disposed in N tracks.

10. The device as claimed in one of claims 6 to 9, **characterized in that** the control installation (6) is furthermore specified and configured for moving loaded conveying units (33) with products (2) between the receiving position (30) and the transfer position (31) so as to form a second groups of products, and for providing the second group of products (2) at the transfer position (31), wherein the at least one second group of products (2) in particular can be provided with a variable placing pattern at the transfer position (31).

## Revendications

1. Procédé d'acheminement de produits (2) d'un premier processus vers un second processus dans une installation d'emballage, sachant qu'un dispositif tampon (3) est prévu entre le premier processus et le second processus, sachant que le dispositif tampon (3) présente une voie de convoyage fermée (32) avec un poste de reprise (30) pour reprendre dans des groupes de reprise (21, 23) des produits (2) du premier processus et avec un poste de remise (31) pour remettre au second processus des produits (2) dans des groupes de remise et plusieurs unités de convoyage (33, 34) qui sont entraînables au moins par sections indépendamment les unes des autres, le long de la voie de convoyage (32), et sachant que les produits (2) sont fournis par le premier processus respectivement dans des groupes de reprise (21, 23) avec un premier motif de composition, le procédé comprenant l'étape suivante :
a. Fourniture d'unités de convoyage vides (33) au poste de reprise (30) du dispositif tampon (3) pour la reprise des groupes de reprise (21, 23), sachant que pour chaque groupe de reprise (21) à changer de place, des unités de convoyage (33) sont fournies en nombre et agencement, conformément au premier motif correspondant de composition,
sachant que les produits (2) sont fournis par le premier processus respectivement en groupes de reprise (21, 23) avec un premier motif variable de composition, sachant que des premiers motifs de composition des groupes de reprise (21, 23) sont tous représentés par une matrice avec au moins une colonne et au moins une rangée, et sachant que selon le motif actuel de composition, toutes les positions de la matrice sont occupées ou des positions individuelles ou plusieurs positions de la matrice présentent un vide, et sachant que le procédé comprend également les étapes suivantes :
b. Déplacement d'unités de convoyage (34) chargées en aval du poste de reprise (30) le long du dispositif tampon (3) pour former un flux de produits lors de la dissolution des groupes de reprise (21, 23) et
c. Fourniture d'unités de convoyage (34) chargées au poste de remise (31) du dispositif tampon (3), sachant que pour chaque groupe de remise (22) à changer de place, des unités de convoyage (34) chargées sont fournies en nombre et agencement, conformément au second motif correspondant de composition.

2. Procédé selon la revendication 1, **caractérisé en ce que** les groupes de reprise (21, 23) et/ou les groupes de remise (22) sont changés de place par groupe.

3. Procédé selon la revendication 1 ou 2, **caractérisé en ce que** des produits défectueux sont expulsés avant ou lors de la remise du premier processus au dispositif tampon (3) et que le premier motif de composition présente un vide (20) à la position des produits expulsés ou à expulser.

4. Procédé selon l'une des revendications 1 à 3, **caractérisé en ce que** le premier processus fournit les produits dans un sens de convoyage dans des rangées disposées les unes derrière les autres, sachant que les groupes de reprise (21, 23) fournis par le premier processus comprennent respectivement au moins une rangée, sachant qu'en particulier, le groupe fourni de produits (2) comprend respectivement N rangées, avec N supérieur ou égal à deux, sachant que les unités de convoyage (33) sont disposées au moins au poste de reprise (30) en N voies et que les N rangées sont changées de place dans les unités de convoyage (33) disposées en N voies.

5. Procédé selon l'une des revendications 1 à 4, **caractérisé en ce que** le groupe de remise de produits est fourni avec un second motif de composition variable.

6. Dispositif pour acheminer des produits (2) d'un premier processus à un second processus d'une installation d'emballage, sachant que les produits (2) sont fournissables par le premier processus en groupes de reprise (21, 23) avec un premier motif de composition, comprenant
- le premier et le second processus,
- un dispositif tampon (3) prévu entre le premier processus et le second processus, sachant que le dispositif tampon présente une voie de convoyage fermée (32) avec un poste de reprise (30) pour la reprise de produits (2) dans des groupes de reprise (21, 23) du premier processus et avec un poste de remise (31) pour la remise de produits (2) dans des groupes de remise (22) au second processus et plusieurs unités de convoyage (33, 34) qui sont entraînables au moins par sections indépendamment les unes des autres le long de la voie de convoyage (32), et
- un dispositif de commande (6) qui est configuré et conçu pour piloter les unités de convoyage (33, 34) de sorte que
a. des unités de convoyage vides (33) sont fournissables au poste de reprise (30) du dispositif tampon (3) pour la reprise des groupes de reprise (21, 23), sachant que pour chaque groupe de reprise (21, 23) à changer de place, des unités de convoyage (33) sont fournissables en nombre et agencement, conformément au premier motif correspondant de composition,
sachant que les produits (2) provenant du premier processus sont fournissables en groupes de reprise (21, 23) avec un premier motif variable de composition, sachant que des premiers motifs de composition des groupes de reprise (21, 23) de produits (2) sont tous représentables par une matrice avec au moins une colonne et au moins une rangée, et sachant que selon le motif actuel de composition, toutes les positions de la matrice sont occupées ou des positions individuelles ou plusieurs positions de la matrice présentent un vide, et sachant que le dispositif de commande (6) est configuré et conçu pour piloter les unités de convoyage (33, 34) de sorte que
b. des unités de convoyage (34) chargées sont déplaçables en aval du poste de reprise (30) le long du dispositif tampon (3) pour former un flux de produits par la dissolution des groupes de reprise (21, 23), et
c. que des unités de convoyage (34) chargées sont fournissables au poste de remise (31) du dispositif tampon (3), sachant que pour chaque groupe de remise (22) à changer de place, des unités de convoyage (34) chargées sont fournissables en nombre et agencement, conformément au second motif correspondant de composition.

7. Procédé selon la revendication 6, **caractérisé en ce qu'**est prévu au moins un dispositif de préhension au moyen duquel les groupes de reprise (21, 23) et/ou les groupes de remise (22) peuvent être changés de place par groupe.

8. Dispositif selon la revendication 6 ou 7, **caractérisé en ce qu'**au moyen du dispositif de commande (6), des produits défectueux sont enregistrables et expulsables avant ou lors d'une remise au dispositif tampon, sachant que le premier motif de composition présente un vide (20) à la position des produits expulsés.

9. Dispositif selon l'une des revendications 6 à 8, **caractérisé en ce que** les produits (2) sont fournis en rangées disposées les unes derrière les autres par le premier processus, sachant que les groupes de reprise fournis par le premier processus comprennent respectivement au moins une rangée, sachant que notamment les groupes de reprise comprennent respectivement N rangées, avec N supérieur ou égal à deux, sachant que la voie de convoyage (32) présente N voies au moins au poste de reprise (30), de sorte que les unités de convoyage (33) peuvent être disposées en N voies au moins au poste de remise (30) et que les N rangées peuvent être changées de place dans les unités de convoyage (33) disposées en N voies.

10. Dispositif selon l'une des revendications 6 à 9, **caractérisé en ce que** le dispositif de commande (6) est également configuré et conçu pour déplacer des unités de convoyage (33) chargées avec des produits (2) entre le poste de reprise (30) et le poste de remise (31) pour former un second groupe de produits et pour fournir le second groupe de produits (2) au poste de remise (31), sachant que notamment ledit au moins un second groupe de produits (2) est fournissable au poste de remise (31) avec un motif de composition variable.
